# EUROPÄISCHE PATENTSCHRIFT

(11) **EP 0 596 324 B1**
(45) Veröffentlichungstag und Bekanntmachung des Hinweises auf die Patenterteilung: **18.12.1996**
(21) Anmeldenummer: 93116948.6
(22) Anmeldetag: 20.10.1993
(51) Int. Cl.: C09K 21/12, C09K 21/04

(54) **Gelbildner- und Gele, ihre Herstellung und Verwendung**
Gelformer and gels, their preparation and use
Formateur de gel et gels, leur préparation et utilisation

(30) Priorität: 02.11.1992 DE 4236936; 11.03.1993 DE 4307631
(43) Veröffentlichungstag der Anmeldung: 11.05.1994
(73) Patentinhaber: BAYER AG, 51368 Leverkusen (DE)
(72) Erfinder: von Bonin, Wulf, Dr., D-51519 Odenthal (DE)

(56) Entgegenhaltungen:
- EP-A- 0 306 677
- EP-A- 0 468 259
- EP-A- 0 527 401
- US-A- 4 725 382
- US-A- 5 151 225
- US-A- 5 156 775
- DATABASE WPI Week 7646, Derwent Publications Ltd., London, GB; AN 76-85658 & JP-A-760 928 (ISHIKAWA) 28. September 1976
- DATABASE WPI Week 7646, Derwent Publications Ltd., London, GB; AN 76-85658 & JP-A-760 928

## Beschreibung

Die vorliegende Erfindung betrifft Gelbildner und Gele, enthaltend Wasser, Aluminiumphosphat, Bor und ein Amin, die Herstellung von Gelen aus thermisch gelierbaren Gelbildnern und Verwendungen dieser Gelbildner und Gele.

Die EP-B 306 677 beschreibt als Brandschutzgele Kombinationen aus Monoaluminiumhydrogenphosphat und Borsäure im Gewichtsverhältnis von 10 bis 25 in Form von 80 gew.-%igen und höher konzentrierten Lösungen, die extrudierbaren, gelartigen Charakter haben, jedoch im Brandfall schmelzflüssig werden, was die Schutzwirkung in Frage stellt.

Zur Vermeidung derartiger Schwierigkeiten wird in der DE-A 4 020 459 ein Gelsystem beschrieben, bei dem in einer Aluminiumphosphatlösung ein Acrylsäurederivat und ein Photoinitiator gelöst und diese Lösung durch Belichtung polymerisiert wird. Die durchzuführende Polymerisation und der zusätzliche Umgang mit Acrylmonomeren stellen eine unvorteilhafte Komplizierung dar. Außerdem neigt dieses Gelsystem zur Abscheidung von kristallinen Trübungen.

In DE-A 4 023 310 und DE-A 4 126 702 werden Brandschutzgele aus Aluminium-tris-phosphat-Ethanolamin-Salzen beschrieben, die für verschiedene Zwecke eingesetzt werden können. Solche Gelschichten sind für die komplikationslose Herstellung gut geeignet, jedoch in Bezug auf das Schmelzverhalten im Beflammungsfalle noch verbesserungswürdig.

Gemäß einem eigenen älteren Vorschlag (DE-Anm. P 42 26 044.2) werden wäßrige Lösungen von Ethanolaminsalzen von Aluminiumphosphaten, mit 2 bis 5 Molen Borsäure (z.B. in Form ihrer Ethanolaminsalze) pro Mol Aluminiumphosphat modifiziert. Sollen solche Lösungen als Brandschutzgele eingesetzt werden, so werden nur bei Zusätzen von andersartigen Gelbildnern, z.B. Acrylamid, gute Ergebnisse erzielt. Der Borgehalt ist bei derartigen Systemen relativ hoch und auch hier stellt die praktische Notwendigkeit eines zusätzlichen Umganges mit Acrylmonomeren und deren Polymerisation eine Komplikation des Herstellungsprozesses dar.

Es wurden nun von organischen Gelbildnern freie Gelbildner gefunden, die dadurch gekennzeichnet sind, daß sie a) saure Aluminiumphosphate, gegebenenfalls in Form von Umsetzungsprodukten mit 0,01 bis 4 Mol Alkanolaminen pro Mol Aluminiumphosphat und b) Umsetzungprodukte von Borsäure mit Alkanolaminen enthalten, wobei a) und b), gerechnet als Feststoffe, im Gewichtsverhältnis 100:55 bis 100:0,5 vorliegen und die Gelbildner 0,5 bis 85 Gew.-% Wasser und Aluminium, Bor, Phosphor und Alkanolamin, insbesonders Monoethanolamin, in atomaren bzw. molaren Verhältnissen von

| Al | B | P | Alkanolamin |
|---|---|---|---|
| 1 | 1,2 bis 1,8 | 2,3 bis 3,7 | 2,3 bis 3,7 |

enthalten.

Diese Brandschutzgelbildner sind besser handhabbar als bisher bekannte.

Solche Gelbildner können durch Erwärmen in Gele überführt werden. Geeignete Temperaturen hierfür sind beispielsweise solche im Bereich von 45 bis 100°C.

Als Wassergehalt wird diejenige Menge Wasser verstanden, die bei Trocknung bei 80°C und Normaldruck bis zur Gewichtskonstanz entweicht. Da die letzten Wasseranteile nur schwierig aus dem System heraustrocknen, kann die Untergrenze des Wassergehalts (0,5 Gew.-%) nur als ca.-Zahl angegeben werden. Vorzugsweise beträgt der Wassergehalt 15 bis 60 Gew.-%.

Vorzugsweise beträgt das atomare bzw. molare Verhältnis von

| Al | B | P | Alkanolamin |
|---|---|---|---|
| 1 | 1,3 bis 1,7 | 2,4 bis 3,6 | 2,4 bis 3,6 |

und besonders bevorzugt

| | | | |
|---|---|---|---|
| 1 | 1,4 bis 1,6 | 2,8 bis 3,2 | 2,8 bis 3,2. |

Ganz besonders bevorzugt beträgt das atomare bzw. molare Verhältnis von

| Al | B | P | Alkanolamin |
|---|---|---|---|
| 1 | 1,5 | 3 | 3. |

Als saure Aluminiumphosphate kommen z.B. Aluminiumsalze von Sauerstoffsäuren des Phosphors in Frage, insbesondere von solchen des fünfwertigen Phosphors, die in wäßrigem Medium sauer reagieren. Bevorzugt sind Umsetzungsprodukte von einem Atom-Äquivalent Aluminium (Al³⁺) in Form von Aluminiumoxid und/oder Aluminiumhydroxid mit 2,3 bis 3,7, vorzugsweise mit 2,8 bis 3,2 Molen ortho-Phosphorsäure. Diese Umsetzungsprodukte können in wäßrigem Medium in Konzentrationen bis zu 90 Gew.-% vorliegen und sind dann klare Flüssigkeiten. Vorzugsweise beträgt die Konzentration derartiger Umsetzungsprodukte im wäßrigem Medium zwischen 50 und 85 Gew.-%.

Falls gewünscht kann man die Aluminiumphosphate im wäßrigen Medium in dieser Konzentration exotherm mit 0,01 bis 4 Molen Alkanolamin, bezogen auf 1 Mol Aluminiumphosphat, umsetzen.

Bevorzugte erfindungsgemäße Gele kann man beispielsweise und bevorzugtermaßen herstellen, indem man zunächst eine zur Aluminiumphosphat-Bildung befähigte Aluminiumverbindung, insbesondere Aluminiumhydroxid, und eine zur Aluminiumphosphat-Bildung befähigte Phosphorverbindung, insbesondere ortho-Phosphorsäure, im gewünschten Al:P-Molverhältnis in Gegenwart von Wasser bei beispielsweise 70 bis 120°C zu einer Aluminiumphosphatlösung umsetzt. Diese kann beispielsweise einen Feststoffgehalt von mindestens 40 Gew.-%, vorzugsweise 70 bis 85 Gew.-% aufweisen. Vorzugsweise läßt man diese Lösung mindestens 2, besser 4 bis 40 Stunden bei 10 bis 40°C reifen.

Separat davon kann man dann eine zur Alkanolaminsalz-Bildung befähigte Borverbindung, insbesondere ortho-Borsäure, und ein Alkanolamin, insbesondere Ethanolamin, im gewünschten B:Alkanolamin-Molverhältnis in Gegenwart von Wasser zusammenbringen und dieser Lösung die, vorzugsweise gereifte, Aluminiumphosphatlösung im gewünschten Molverhältnis zusetzen. Unter mäßiger Erwärmung auf beispielsweise ca. 75°C-95°C entsteht dann eine Lösung erfindungsgemäßer Gelbildner. Diese ist nach Abkühlung auf z.B. unter 45°C gut lagerfähig und niedrigviskos.

Die Bildung erfindungsgemäßer Gele, gegebenenfalls unter Formgebung, kann man z.B. durch 3- bis 80-stündiges, vorzugsweise 10- bis 40-stündiges Erwärmen auf eine oder mehrere Temperaturen im Bereich von z.B. 45 bis 120°C, vorzugsweise 60 bis 95°C erreichen. Bei Temperaturen über 100°C kann es gegebenenfalls erforderlich werden, die Gelierung in einem geschlossenen System durchzuführen. Man kann die Gelbildung direkt mit frisch hergestellter Gelbildner-Lösung durchführen. Es ist aber bevorzugt, die Gelbildner-Lösung vor der Gelbildung mindestens 24 Stunden bei Raumtemperatur zu lagern.

Die Bor-Alkanolamin-Lösung kann beispielsweise 40 bis 100 Gew.-% Feststoffe enthalten und die Aluminiumphosphatlösung wird, vorzugsweise gegebenenfalls nach entsprechender Verdünnung, als 40 bis 75 Gew.-% Feststoffe enthaltende Lösung mit der Bor-Alkanolamin-Lösung zusammengebracht.

Die zu verwendenden Alkanolamine können auch Ethergruppen enthalten. Bevorzugt sind solche Alkanolamine, die durch Umsetzung von Aminen oder Ammoniak, vorzugsweise aliphatischen Aminen mit einer oder mehreren Aminogruppen oder Ammoniak mit bis zu 50 Mol Alkylenoxid, vorzugsweise Ethylenoxid und/oder Propylenoxid, pro NH-Gruppierung erhältlich sind. Besonders gut geeignet als Alkanolamin ist Monoethanolamin. Es können auch Amin-Gemische Verwendung finden.

Gewünschtenfalls kann man für die Umsetzung von sauren Aluminiumphosphaten mit Alkanolaminen pro Atom-Äquivalent Aluminium (Al³⁺) 0,01 bis 4 Mol Alkanolamin verwenden. Vorzugsweise wird nicht mehr Alkanolamin verwendet, als zum Erreichen eines pH-Wertes von 8 (in wäßrigem, 50 gew.-%igem Medium) erforderlich ist. Im Falle von Aluminiumdihydrogenphosphat [Al(H₂PO₄)₃], kann man z.B. 2 bis 4 Mole, vorzugsweise 2,3 bis 3,7 Mole Monoethanolamin einsetzen.

Als Borsäure kommen im Prinzip alle Sauerstoffsäuren des Bors in Frage, insbesondere ortho-Borsäure, sowie Vorläufer davon, z.B. Boroxide und Boroxidhydrate, aus denen durch Hydrolyse ortho-Borsäure entstehen kann. Für die zur Umsetzung mit der Borsäure heranzuziehenden Alkanolamine gilt das zuvor für die Umsetzung mit Aluminiumphosphaten beschriebene entsprechend. Auch hier ist Monoethanolamin bevorzugt.

Pro Atom-Äquivalent Bor (B³⁺) in Form von Borsäure oder Borsäurevorläufern werden im allgemeinen 0,5 bis 4, vorzugsweise 1,3 bis 3,1 Mole Alkanolamin eingesetzt. Die Umsetzung kann wasserfrei erfolgen, sie erfolgt jedoch zweckmäßigerweise in einem wäßrigen Medium in solchen Konzentrationen, daß das Umsetzungsprodukt dann in einer Konzentration von 50 bis 100, vorzugsweise 60 und 100 Gew.-% vorliegt.

Erfindungsgemäße Gelbildner, die Umsetzungsprodukte von Aluminiumphosphaten mit Alkanolaminen und Borsäure mit Alkanolaminen enthalten, weisen vorzugsweise in beiden Umsetzungsprodukten jeweils das gleiche Alkanolamin oder Amin-, bzw. Alkanolamingemisch auf.

Bei zu hohen Anteilen an Bor enthaltener Komponente können eventuell Störungen der Klarheit, der Alterungsbeständigkeit oder des Gelierungsvermögens auftreten.

Eine weitere Verfahrensweise besteht darin, daß man zunächst aus einem sauren Aluminiumphosphat und einem Umsetzungsprodukt aus Borsäure und Alkanolamin in wäßrigem Medium eine gesonderte borhaltige Komponente herstellt, die auch Aluminium enthält, beispielsweise in einem molaren Verhältnis von Aluminium zur Bor (Al:B) wie 1:2 bis 1:10, vorzugsweise 1:3 bis 1:6, und diese dann in wäßrigem, beispielsweise 50 bis 70 gew. -%igem Medium mit weiterem saurem Aluminiumphosphat oder einem Umsetzungsprodukt aus saurem Aluminiumphosphat und Alkanolamin abmischt und zur Umsetzung bringt. Auch hierbei ist auf die Einhaltung der angegebenen Bruttogewichtsverhältnisse von Aluminium zu Phosphor zu Bor zu Alkanolamin, wie oben angegeben wurde, zu achten.

Es ist auch möglich, jedoch weniger bevorzugt, ein in wäßrigem Medium vorliegendes Umsetzungsprodukt aus saurem Aluminiumphosphat und Alkanolamin mit entsprechenden Mengen Borsäure oder deren Vorläufern umzusetzen, wobei auch die erfindungsgemäßen Brandschutzgelbildner mit der notwendigen Bruttozusammensetzung entstehen können. In vergleichbarer Weise kann man z.B. zunächst ortho-Phosphorsäure mit Alkanolamin umsetzen, dann Borsäure und dann Aluminiumhydroxid damit in wäßrigem Medium umsetzen, wobei letztlich auch ein erfindungsgemäßer Brandschutzgelbildner erhalten wird.

Man kann die einzelnen Komponenten auch auf andere Weise zusammengeben, etwa dann, wenn man ganz oder teilweise kontinuierlich und/oder in einem Eintopfverfahren arbeiten will. Beispielsweise kann man zunächst eine Umsetzung der Aluminiumphosphatlösung mit dem Alkanolamin vornehmen und dann die Borverbindung hinzufügen oder zunächst die Bor- und/oder Phosphorverbindung mit einem Alkanolamin umsetzen und dann z.B. frisch gefälltes Aluminiumhydroxid hinzufügen.

Das bedeutet, die Reihenfolge der Schritte, die zur Herstellung der erfindungsgemäßen Gelbildner führen, ist in breitem Rahmen variierbar.

Die Herstellungen der Aluminium enthaltenden Komponente und der Bor enthaltenden Komponente erfolgen vorzugsweise bei Temperaturen zwischen 20 und 100°C und in einem wäßrigen Medium, in dem die einzelne Komponente abschließend in einer Konzentration zwischen 50 und 85 Gew.-% vorliegt. Die Abmischung der Aluminium enthaltenden mit der Bor enthaltenden Komponente wird im allgemeinen bei 18 bis 95°C durchgeführt. Kurzfristig kann man gegebenenfalls bis auf ca. 100°C erhitzen. Eine allzu lange Erhitzung auf Temperaturen über 40°C ist bei allen Komponenten und Komponenten-Gemischen zu vermeiden, da sonst eine vorzeitige Gelierung oder Viskositätserhöhung eintreten kann.

Anstelle des vorzugsweise benutzten Zweitopfverfahrens, bei dem erst eine Aluminiumphosphatlösung und eine Bor-Alkanolamin-Salz-Lösung hergestellt und die beiden Lösungen dann durch Verrühren oder in einem kontinuierlich arbeitenden Mischaggregat vereinigt werden, können auch Eintopfverfahren angewendet werden.

Auch kann man zunächst mit hohen Feststoffkonzentrationen arbeiten und diese dann vor, während oder nach der Bildung der Gelbildner-Lösung durch Verdünnen herabsetzen.

Gegebenenfalls kann man den erfindungsgemäßen Gelen, den Ausgangsprodukten zu ihrer Herstellung oder den erfindungsgemäßen Gelbildnern Zusatzstoffe hinzufügen, beispielsweise Tenside, Haftvermittler, Farbgeber, Porenkeimbildner, Füllstoffe, Lichtschutzmittel, Oxidationsschutzmittel und/oder Verstärker. Solche Zusatzstoffe sind an sich bekannt, z.B. Drähte, Fasern, Gewebe oder Netze.

Die erfindungsgemäßen Gelbildner und Gele eignen sich besonders gut für Zwecke des Brandschutzes als Brandschutzgelbildner bzw. Brandschutzgele.

Einer der wesentlichen Vorteile der erfindungsgemäßen Brandschutzgelbildner liegt darin, daß ihre Viskosität auch bei Feststoffgehalten in wäßrigem Medium von über 60 Gew.-% deutlich unter der Viskosität eines entsprechenden borfreien Aluminiumphosphat/Alkanolamin-Gelbildners gleicher Konzentration liegt.

Das bedeutet, daß erfindungsgemäße Brandschutzgelbildner eine bessere Lagerfähigkeit aufweisen und sich wegen der verminderten Viskosität erheblich einfacher handhaben lassen als borfreie Gelbildner auf der Basis von Aluminiumphosphat.

Bereits bei Zusatzmengen von ungefähr 10 Gew.-% der Borsäure/Alkanolamin-Komponente (bezogen auf die Summe der Borsäure/Alkanolamin- und der Aluminiumphosphat-Komponente), erhält man einen Brandschutzgelbildner mit stark verringerter Viskosität, der ein Gel bildet, das bei 80°C über 200 Stunden klar bleibt. Die Trockensubstanz, erhalten z.B. durch Trocknung bei 120°C des so modifizierten Gelbildners, schäumt bei Temperaturen von 600°C um ungefähr 30 Vol.-% mehr auf als die Trockensubstanz erhalten aus einem entsprechenden, aber keine Borsäure/Alkanolamin-Komponente -Komponente enthaltenden Brandschutzgelbildner.

Die Gelbildner-Lösungen weisen eine gute Lagerfähigkeit auf, auch bei Temperaturen bis zu ca. 40°C. Die Gele bilden sich z.B. bei 90°C innerhalb von wenigen Stunden als klare, temperaturstabile Gele, die sich durch ein gutes mechanisches Stehvermögen auszeichnen und bei Beflammung bei Temperaturen im Bereich 100 bis 600°C überraschenderweise nicht zum Fließen neigen.

Im Gegensatz zu Gelen, die man ohne Zusatz der Bor-Alkanolamin-Umsetzungsprodukte oder unter Zusatz von zu geringen Mengen der Bor-Komponente oder unter Verwendung von zu großen Bor- oder Alkanolamin-Mengen erhält, neigen erfindungsgemäße Gele bei Temperaturen über 100°C nicht mehr dazu, eine fließende Schmelze zu bilden, die bei Beflammung wegfließen kann. Dies ist ein technisch wichtiger, überraschender Vorteil der erfindungsgemäßen Gele.

Weiterhin weisen erfindungsgemäße Gele eine verbesserte feinporige Intumeszenz auf. Die Gelbildner-Lösungen haben relativ geringe Viskositäten auch bei Feststoffkonzentrationen von über 65 Gew.-%. Auch bei Verdünnungen auf weniger als 40 Gew.-% Feststoffgehalt sind sie noch gelierfähig und weisen im allgemeinen moderate pH-Werte zwischen 5 und 6 auf. Die daraus gebildeten, von zusätzlichen Gelbildnern freien Gele haben eine deutlich verminderte Rißbildungtendenz und neigen bei erhöhten Temperaturen nicht zum Fließen. Neben der guten Lagerungsbeständigkeit bei konstanten, auch erhöhten Temperaturen haben die Gele auch eine gute Wechseltemperaturlagerbeständigkeit, beispielsweise bei zwischen -18°C, +20°C und +80°C schwankenden Temperaturen.

Die erfindungsgemäßen Brandschutzgelbildner und Brandschutzgele können gegebenenfalls zusätzlich z.B. Tenside, z.B. fluororganische, nichtionische und/oder ionische Tenside, Zusätze von sonstigen Hilfsstoffen, etwa Zuckern oder Polyalkoholen zur Beeinflussung des Intumeszenzverhaltens im Brandfalle oder Hilfsstoffe zur Verbesserung der Haftung des Gels, sowie Farbgeber und/oder Stabilisatoren gegen Licht und Strahlung enthalten. Die Wassergehalte vor und nach der Gelierung liegen im allgemeinen unter 50 Gew.-%, vorzugsweise zwischen 20 und 40 Gew.-%.

Es ist möglich, einen erfindungsgemäßen Brandschutzgelbildner auf die Oberfläche eines Materials aufzubringen und dort zu gelieren oder zu trocknen. Bei Temperaturen zwischen Raumtemperatur und 150°C, vorzugsweise zwischen 80 und 120°C können dann auch niedrigere Wassergehalte als 20 Gew.-% realisiert werden.

Die Summe der Vorteile der vorliegenden Erfindung stellt einen beträchtlichen technischen Fortschritt auf dem Gebiet des Brandschutzes dar.

Bei der Herstellung erfindungsgemäßer Brandschutzgele kann man gegebenenfalls zusätzlich zu oder anstelle des bevorzugten Aluminiumhydroxids auch andere Aluminiumverbindungen einsetzen, die sich in Aluminiumphosphate überführen lassen, beispielsweise Aluminiumoxide, Aluminiumoxidhydrate, Aluminiumsalze flüchtiger Säuren (etwa Aluminiumchloride, -carbonate oder -acetate) oder Aluminiumborate. Zusätzlich zu Aluminiumverbindungen können gegebenenfalls, z.B. bis zu 20 Mol-%, bezogen auf Aluminium, andere Metallverbindungen eingesetzt werden, z.B. solche der 1. bis 4. Hauptgruppe des periodischen Systems der Elemente und/oder von Eisen, Cobalt und/oder Nickel.

Zusätzlich zu oder anstelle der bevorzugten ortho-Phosphorsäure kann man gegebenenfalls andere Phosphorverbindungen einsetzen, die sich in Aluminiumphosphate überführen lassen, beispielsweise dehydratisierte Formen der ortho-Phosphorsäure, Phosphoroxide, Phosphonsäuren, Phosphinsäuren, Phosphorsäureester und/oder Phosphorsäuresalze, letztere z.B. als Ammonium- und/oder Alkanolaminsalze.

Zusätzlich zu oder anstelle der bevorzugten ortho-Borsäure kann man gegebenenfalls andere Borverbindungen einsetzen, z.B. dehydratisierte Formen der ortho-Borsäure, Boroxide, Ammoniumborate und/oder Borate sonstiger Amine, insbesondere Alkanolaminborate.

Zusätzlich zu oder anstelle des bevorzugten Ethanolamins kann man gegebenenfalls andere Alkoxylierungsprodukte des Ammoniaks wie Diethanolamin und Triethanolamin und/oder andere vorzugsweise aliphatische Aminverbindungen einsetzen, z.B. Ammoniak, Ethylendiamin, Polyalkylenpolyamine, Piperazine und/oder Morpholine.

Erfindungsgemäße Brandschutzgele kann man z.B. zur Herstellung brandschützender oder Oberflächen-vergütender (Antifogging, Härte) Beschichtungen, Tränkungen, Fugendichtstoffen, Kitten, Formkörpern, Dichtungsbändern, Bauelementen, Intumeszenz-Pigmenten und/oder Intumeszenz-Füllstoffen verwenden. Bei diesen Anwendungen können die Gele je nachdem beispielsweise 0 bis 90 Gew.-% Wasser enthalten.

Die erfindungsgemäßen Gelbildner und Gele sind naturgemäß alkalifrei und weisen eine weitere Reihe von Vorteilen auf: So ist z.B. kein Monomerzusatz (Acrylamid) nötig und Komplikationen durch dessen Handhabung und Polymerisation entfallen. Trotzdem kann man in Betracht ziehen, erfindungsgemäße Gelbildner und Gele gegebenenfalls mit anderen Gelbildnern oder Gelen zu kombinieren, z.B. mit (Poly)-Acrylamid, Polyvinylalkohol, Stärke, Gelatine, Eiweißstoffen oder Montmorilloniten.

Die Gelbildner-Lösungen können vor der Gelierung gegebenenfalls weiter verdünnt werden. Bevorzugt als Verdünnungsmitel ist Wasser, es ist auch der Zusatz von mit Wasser mischbaren organischen Lösungsmitteln, zumindest anteilsweise, möglich.

Neben den schon genannten Zusatzstoffen kommen auch Zusätze von carbonisierenden Polyalkoholen, z.B. Zuckern, Glykolen, Glycerin, Pentaerythrit und/oder Polyvinylalkohole und sonstige wasserlösliche oligomere oder polymere Zusätze in Betracht. In speziellen Fällen, sofern keine klaren Gelschichten erforderlich sind, kann man auch Polymerdispersionen mit erfindungsgemäßen Gelen oder Gelbildner-Lösungen mischen. Haftvermittler, Tenside, Lichtschutzstabilisatoren, UV- und IR-Filtersubstanzen sowie farbgebende Zusätze werden gegebenenfalls z.B. unter 3 Gew.-%, vorzugsweise unter 1 Gew.-%, bezogen auf das erfindungsgemäße Gel, zugesetzt. Füllstoffe und carbonisierende Zusätze können gegebenenfalls z.B. in Mengen von 1 bis 75 Gew.-%, vorzugsweise 20 bis 60 Gew.-%, bezogen auf die Gesamtmischung, zum Einsatz kommen.

Man kann saugfähige Substrate, etwa Pulver, Faserstoffe, Schaumstoffe, Cellulosewerkstoffe, Papiere, Vliese, Gewebe oder Gewirke mit erfindungsgemäßen Gel-Vorprodukt-Lösungen tränken und dann, gegebenenfalls nach Formgebung, die Gelierung durchführen. Hierbei erhält man, ohne oder nach partieller oder vollständiger Trocknung, Materialien mit guter feuerabweisender Wirkung und intumeszentem, keramisierungsfähigem Charakter, die als Hilfsmittel, Werkstoffe oder Bauelemente im vorbeugenden Brandschutz Verwendung finden können, beispielsweise zur Herstellung von Kabelschotts, Flammschutz-Umwicklungen und -Ummantelungen, Hohlraumfüllungen, Abdichtungselementen und Feuersperren.

Von Interesse im vorbeugenden Brandschutz oder bei der Herstellung von Formteilen oder Leichtwerkstoffen ist die Kombination der erfindungsgemäßen Gele mit blähfähigen Materialien, z.B. blähfähigen Silikaten oder Graphiten in nicht, teilweise oder vollständig aufgeblähter Form z.B. indem man solche Graphite und/oder Silikate mit den erfindungsgemäßen Gelen oder Gelbildner-Lösungen versetzt und diese Mischung gegebenenfalls einer Formgebung und/oder einer thermischen Nachbehandlung, z.B. zwischen 80 und 1000°C, unterzieht.

Man kann erfindungsgemäße Gele auch in zerkleinerter Form oder die Gelbildner-Lösungen in sprühgetrockneter oder nach dem Trocknen pulverisierter Form, massiv oder (infolge ihrer Intumeszenzeigenschaft) thermisch teilweise oder vollständig aufgeblähter Form als isolierende und feuerabweisende Hohlraumfüllung, als Füllstoff, als Beschichtung oder, gegebenenfalls in Kombination mit Mineralfasern, organischen Fasern und/oder sonstigen Verstärkungselementen (z.B. Drähte oder Gitter) in zu Platten oder Formkörpern sonstiger Art verpreßter Form einsetzen, vorzugsweise für Brandschutzzwecke.

Da die erfindungsgemäßen Gelbildner-Lösungen filmbildenden Charakter haben, sind sie nicht nur als Tränkmittel, sondern auch, insbesondere bei Wassergehalten von 5 bis 50 Gew.-% als Lackierung oder Beschichtung von starren oder flexiblen Substraten geeignet und verleihen diesen, etwa Metallen (wie Aluminium), Hölzern, Geweben, Keramiken oder Kunststoffen, eine verbesserte Feuerwiderstandsfähigkeit.

Im folgenden wird die Erfindung beispielhaft erläutert. Die angegebenen Teile und Prozente beziehen sich auf das Gewicht, sofern nichts anderes vermerkt ist.

### Beispiele

### Beispiel 1

Eine 55 %ige Lösung von 1 Mol Aluminiumphosphat in Form eines bei 100°C in Wasser hergestellten Umsetzungsproduktes aus 1 Mol Aluminiumhydroxid mit 3 Molen 85 %iger ortho-Phosphorsäure wurde mit 3,1 Mol Ethanolamin, beginnend bei 20°C, verrührt. Die Temperatur stieg dabei auf 75°C an. Nach wenigen Minuten wurde die Lösung klar und auf 20°C abgekühlt. Der Feststoffgehalt betrug 66 Gew.-%. Nach 16 Stunden bei 20°C wurde eine Viskosität von 3800 mPa.s gemessen (Hake Viskotester VT 02/1).

In Wasser wurde eine 66 %ige Lösung des Umsetzungsproduktes aus 1 Mol ortho-Borsäure und 1 Mol Monoethanolamin hergestellt.

Nun wurden 9 Teile der Aluminium enthaltenden Lösung und 1 Teil der Bor enthaltenden Lösung bei Raumtemperatur vermischt und eine klare Lösung erhalten. Diese wurde 16 Stunden bei 20°C gelagert und dann die Viskosität wie oben bestimmt. Sie betrug 630 mPa.s.

Danach wurde die Mischung in eine Glasflasche gefüllt und in einen auf 80°C geheizten Heizschrank gestellt. Nach 4 Stunden war das Material geliert, nach 12 Stunden wurde es aus dem Heizschrank entnommen und abgekühlt. Es hatte sich ein klares stabiles Gel gebildet.

Anschließend wurde die Flasche mit dem Gel noch einmal in den auf 80°C geheizten Heizschrank gebracht und 180 Stunden darin belassen. Danach wurde abgekühlt. Es konnte keine Eintrübung des Gels festgestellt werden.

### Beispiel 2

Es wurde zunächst eine 70 %ige Lösung von 1 Mol Aluminiumdihydrogenphosphat in Wasser hergestellt. Dazu wurde bei 50°C eine 70 %ige Lösung des Umsetzungsproduktes von 5 Molen ortho-Borsäure und 5 Molen Monoethanolamin hinzugefügt. Unter leichter Erwärmung wurde eine klare Lösung erhalten, die auf einen Gehalt von 66 % verdünnt wurde. Dann wurde sie in den tabellarisch aufgeführten Verhältnissen mit der 66 Xigen Lösung einer Aluminiumphosphat/Ethanolamin-Komponente (hergestellt wie in Beispiel 1) abgemischt, wobei anschließend die ebenfalls angeführten Viskositäten wie im Beispiel 1 gemessen wurden.

| | | | | | |
|---|---|---|---|---|---|
| % Aluminium enthaltende Komponente | *) | | | | *) |
| | 100 | 90 | 80 | 70 | 50 |
| % Bor enthaltende Komponente | - | 10 | 20 | 30 | 50 |
| Viskosität [mPa.s bei 20°C] | 3800 | 1080 | 870 | 700 | 580 |

| | | | | | |
|---|---|---|---|---|---|
| *) zum Vergleich | | | | | |

Alle diese Mischungen wurden getrennt 24 Stunden in einen auf 80°C erhitzten Heizschrank gebracht und danach abgekühlt. Dabei zeigte sich, daß alle Proben, bis auf die 50 %/50 %-Probe ein klares steifes Gel gebildet hatten. Die 50 %/50 %-Probe ließ sich auch bei längerer Beheizung nicht gelieren.

Die beiden erstgenannten Proben (100 %/0 % und 90 %/10 % wurden für weitere 180 Stunden bei 80°C gehalten. Es waren keine Veränderungen feststellbar. Das bedeutet, daß die verbesserte Handhabbarkeit infolge niedrigerer Viskosität nicht mit einer Verschlechterung der Alterungsbeständigkeit einhergeht.

### Beispiel 3

### Herstellung einer Al-Phosphatlösung (nicht erfindungsgemäß)

624 Teile Hydrargillit (technisches Aluminiumhydroxid) wurden in 2766 Teilen 85 %ige ortho-Phosphorsäure (Molverhältnis Al:P 1:3) und 262 Teile Wasser eingetragen und bei 100 bis 110°C 4 Stunden verrührt. Es entstand eine klare Lösung mit einem Feststoffgehalt von 70 %. Diese wurde mit 279 Teilen Wasser auf 65 % verdünnt und auf Raumtemperatur abgekühlt. Im folgenden wird diese Lösung als AP-Lösung bezeichnet.

### Beispiel 4

### Herstellung einer Lösung eines Borsäure-Ethanolamin-Komplexes (nicht erfindungsgemäß)

In 1187,6 Teilen Wasser wurden 741,6 Teile ortho-Borsäure dispergiert und mit 1464 Teilen Ethanolamin (Molverhältnis B:Amin 1:2) unter gutem Rühren versetzt. Hierbei erfolgte ein Temperaturanstieg auf etwa 45°C, und es bildete sich eine klare, 65 %ige Lösung. Die Lösung wurde auf Raumtemperatur abgekühlt. Im folgenden wird diese Lösung als BE-Lösung bezeichnet.

### Beispiel 5

### Herstellung eines borfreien Komplexes aus der AP-Lösung und Ethanolamin im Molverhältnis Al:P:Amin = 1:3:3 zu Vergleichszwecken (nicht erfindungsgemäß)

625 Teile der AP-Lösung (nach 40-stündiger Lagerung bei Raumtemperatur) wurden mit Wasser auf 55 % verdünnt. Dann wurden unter gutem Rühren 210 Teile Ethanolamin hinzugegeben. Das Reaktionsgemisch erwärmte sich auf 75°C und bildete eine klare Lösung. Die Lösung wurde im Verlauf von 15 Minuten auf Raumtemperatur abgekühlt und mit 17 Teilen Wasser auf einen Feststoffgehalt von 65 % eingestellt. Nach einer Reifung von 30 Stunden bei Raumtemperatur hatte die Lösung eine mit dem Haake-Viscotester bei 20°C gemessene Viskosität von 3500 mPa.s Im folgenden wird diese Lösung als APE-Lösung bezeichnet.

### Beispiel 6

### Herstellung einer erfindungsgemäßen Gelbildner-Lösung

212 Teile BE-Lösung wurden in einem Rührtopf vorgelegt und unter gutem Rühren bei 25°C mit 244,6 Teilen AP-Lösung (gereift 4 Stunden bei Raumtemperatur) versetzt. Das Molverhältnis war 2:3, entsprechend der Zusammensetzung AlB_{1,5}P₃Amin₃. Man erhielt unter Erwärmen auf 70°C eine klare, 65 %ige Gelbildnerlösung, die sofort auf Raumtemperatur abgekühlt wurde. Nach einer Reifung von 24 Stunden bei Raumtemperatur hatte die Lösung, gemessen mit dem Haake-Viscotester, bei 20°C eine Viskosität von 600 mPa.s. Im folgenden wird diese Lösung als APBE-Lösung bezeichnet.

Aus der gemessenen Viskosität ersieht man die Viskosi-tätsabsenkung gegenüber der gleich konzentrierten, borfreien Lösung des Beispiels 5.

### Beispiel 7 (nicht erfindungsgemäß)

### Gelierung der APE-Lösung, der AP-Lösung und der BE-Lösung zu Vergleichszwecken

Je ein Reagenzglas wurde zur Hälfte mit der BE-Lösung, der AP-Lösung (40 Stunden bei Raumtemperatur gealtert) und mit der APE-Lösung (40 Stunden bei Raumtemperatur gealtert) gefüllt und verschlossen. Dann wurden die drei Reagenzgläser waagerecht gelegt und 12 Stunden bei 80°C getempert. Nach dieser Zeit waren die BE-Lösung und die AP-Lösung noch flüssig, während die APE-Lösung zu einem mechanisch stabilen, klaren Gel geliert war, welches bei senkrechter Stellung des Glases bei Raumtemperatur nicht zusammenlief (im folgenden wird das letztere Gel als Gel 7 bezeichnet).

Auch bei längerer Temperung gelierten die AP-Lösung und die BE-Lösung nicht.

### Beispiel 8

### Gelierung der erfindungsgemäßen Gelbildner-Lösung APBE

Es wurde analog Beispiel 7 mit der APBE-Lösung aus Beispiel 6 verfahren. Man erhielt ebenfalls ein klares, mechanisch stabiles Gel, das bei Senkrechtstellung sowohl bei Raumtemperatur als auch bei 80°C nicht zusammenlief (im folgenden wird dieses Gel als Gel 8 bezeichnet).

### Beispiel 9

### Vergleich des Alterungsverhaltens von Gel 7 und Gel 8

a) Gel 7 und Gel 8 wurden bei 80°C 300 Stunden lang getempert und danach beurteilt:
   Gel 7 zeigte punktuell starke Eintrübungen, während Gel 8 klar und stabil geblieben war.
b) Gel 7 und Gel 8 wurden bei Raumtemperatur 6 Monate unter Lichtzutritt gelagert und danach beurteilt: Gel 7 zeigte punktuell deutliche Eintrübungen, während Gel 8 klar und stabil blieb.
   Diese Alterungsversuche zeigen die guten Alterungseigenschaften erfindungsgemäßer Gele.

### Beispiel 10

### Vergleich des Schmelzverhaltens von Gel 7 und Gel 8

a) Die entsprechend den Beispielen 7 und 8 erhaltenen, in waagerechter Lage halb mit standstabilem Gel gefüllten Reagenzgläser wurden senkrecht gestellt und seitlich mit einem beheizten Luftstrom beaufschlagt, dessen Temperatur innerhalb von 30 Sekunden von 20 bis 300°C anstieg und dann bei 300°C blieb (Thermofön). Dabei wurde das Schmelzverhalten der Gele beurteilt:
   Das Gel 7 schmolz innerhalb von 30 Sekunden und floß am Boden des senkrecht stehenden Reagenzglases zu einer blasenwerfenden Schmelze zusammen. Nach 1 Minute war der größte Teil des Gels zu einer Schmelze am Boden des Reagenzglases zusammengelaufen.
   Bei Gel 8 erfolgte kein Schmelzen und Zusammenlaufen. Bei der thermischen Beanspruchung bildeten sich im Gel, ohne daß dieses flüssig ablief, viele kleine Risse und Bläschen. Im Verlaufe von 60 Sekunden war das gesamte Gel, ohne abzulaufen, zu einer mit feinen Blasen durchsetzten Masse intumeszent aufgetrieben worden.
b) Die gleichen Phänomene wurden beobachtet, als in einem entsprechenden Versuch die Temperatur des Heißluftstroms bis auf 500°C gesteigert wurde.
   Die Versuche a) und b) zeigen die gute Schmelzstabilität des aus der erfindungsgemäßen Gelbildner-Lösung erhaltenen Gels.

### Beispiel 11

Einfluß der Alterung der AP-Lösung auf die Geleigenschaften
a) Es wurde eine AP-Lösung gemäß Beispiel 3 hergestellt, jedoch sofort nach Erhalt einer klaren Lösung auf Raumtemperatur abgekühlt und unmittelbar danach, gemäß Beispiel 6, zu einer Gelbildner-Lösung verarbeitet. Dann wurde der Gelierungsversuch gemäß Beispiel 8 bei 90°C durchgeführt und beurteilt:
   Man erhielt nach 12 Stunden kein Gel. Das Vorprodukt war immer noch flüssig.
b) Der Versuch wurde mit einer AP-Lösung wiederholt, die 1 Stunde bei Raumtemperatur gealtert worden war. Auch in diesem Falle wurde noch kein Gel erhalten.
c) Der Versuch wurde nochmals mit einer 2 Stunden bei Raumtemperatur gealterten AP-Lösung durchgeführt. Nunmehr wurde ein mechanisch sehr weiches Gel erhalten, das beim Senkrechtstellen zum Zusammenfließen neigte.
d) Eine weitere Wiederholung mit einer 3 Stunden bei Raumtemperatur gealterten AP-Lösung ergab ein mechanisch weiches, aber standfestes klares Gel. Dieses Gel zeigte bereits annähernd die gute Schmelzstandfestigkeit bei thermischer Beanspruchung (siehe Beispiel 10, Gel 8).

### Beispiel 12 (nicht erfindungsgemäß)

### Demonstration der Veränderung des Gelcharakters bei von der erfindungsgemäßen Zusammensetzung abweichenden Zusammensetzungen der Gelbildner-Lösung bzw. des Gels

a) Man arbeitete wie in Beispiel 6, verwendete jedoch eine BE-Lösung, bei deren Herstellung die doppelte Menge Ethanolamin verwendet worden war.
   Im Gelierversuch, analog Beispiel 8, erhielt man kein Gel, sondern das Material blieb flüssig.
b) Man arbeitete analog Beispiel 6, verwendete jedoch die 1,5-fache Menge der BE-Lösung.
   Im Gelierversuch, analog Beispiel 8, erhielt man kein Gel, sondern das Material blieb flüssig.
c) Man arbeitete analog Beispiel 6, verwendete jedoch nur die 0,3-fache Menge an BE-Lösung.
   Im Gelierversuch, analog Beispiel 8, erhielt man zunächst kein Gel, sondern erst nach mehr als 24 Stunden Temperung ein sehr weiches Gel. das im Temperungsversuch, analog Beispiel 10, ein unerwünschtes Schmelzen zeigte, das zum Zusammenlaufen des thermisch belasteten Gels führte.
   Diese Versuche zeigen, daß Gele mit den erwünschten verbesserten Eigenschaften in Bezug auf Gelierverhalten der Gelbildner-Lösung und Schmelzverhalten bei thermischer Belastung nur mit erfindungsgemäßen Gel-Zusammensetzungen erhalten werden.

### Beispiel 13

### Modifizierung der Herstellungsweise erfindungsgemäßer Gelbildner

Die gemäß Beispiel 5 erhaltene APE-Lösung, enthaltend auf 1,2 Mol des Additionsproduktes aus Aluminium-tris-phosphat und 3 Mol Ethanolamin, wurde mit einer 65 %igen Dispersion von 96,4 Teilen ortho-Borsäure in Wasser (Molverhältnis Al:B = 1:1,3) bei 50°C gut verrührt, bis eine klare Lösung entstanden war.

Nach einer Lagerung von 30 Stunden bei Raumtemperatur ergab ein Gelierversuch analog Beispiel 8 ein klares Gel, das sich analog dem gemäß Beispiel 8 getesteten Gel verhielt.

### Beispiel 14

### Kontinuierliche Herstellung einer erfindungsgemäßen Gelbildner-Lösung

Eine Dosierpumpe förderte 74 Volumenteile pro Minute einer 25 Stunden bei Raumtemperatur gealterten AP-Lösung. Eine zweite Dosierpumpe förderte 94 Volumenteile pro Minute einer 25 Stunden bei Raumtemperatur gealterten BE-Lösung.

Beide Dosierpumpen arbeiteten auf einen Rührwerksmischkopf zu, wie er für die Polyurethanherstellung üblich ist. In dem hochtourig laufenden Mischkopf wurden die Komponenten sehr schnell und sehr intensiv vermischt. Hinter dem Mischkopf befand sich eine 10 m lange Transportleitung, die in der Mitte einen Statikmischer aufwies, durch den das Reaktionsgemisch nachvermischt wurde. Dann floß das klare farblose Reaktionsgemisch über einen Kühler und mit etwa 35°C in Vorratsgefäße, in denen es auf Raumtemperatur abkühlte.

Im Gelierversuch analog Beispiel 8 wurde ein klares Gel erhalten, das in seinen Eigenschaften dem gemäß Beispiel 8 getesteten Gel entsprach.

### Beispiel 15

### Verdünnungsmöglichkeiten der Gelbildner-Lösung und Füllstoffzusätze

a) Eine 65 %ige APBE-Lösung wurde mit Wasser auf Feststoffkonzentrationen von 50, 40, 30, 20, 10 und 5 % verdünnt. Dann wurden mit den Lösungen zylindrische Prüfgläser in liegender Position zur Hälfte gefüllt und 24 Stunden bei 80°C getempert. Danach wurden die Prüfgläser senkrecht gestellt und beurteilt: In allen Fällen war die Gelierung eingetreten. Bei der 10 %-Probe neigte das Gel bei Senkrechtstellung zum Abrutschen. Bei der 40 und 50 %-Probe zeigte sich eine schwache, bei der 30 %-Probe und darunter eine deutliche Opazität, die mit sinkender Konzentration zunahm.
b) Mit einer auf 70 % eingestellten APBE-Lösung wurde eine Polyurethanschaumstoffmatte (Raumgewicht 30 kg/m³) satt getränkt. Anschließend wurde die Matte in Polyethylenfolie verpackt und im Verlauf von 25 Stunden bei 80°C gelieren gelassen. Man erhielt ein flexibles Verbundmaterial, das zum flexibel handhabbaren, feuerabweisenden Verschluß von Fugen, Kabelschotts oder Wanddurchführungen und zum Abdecken von Kabelbahnen geeignet ist.
   Der Vorteil dieses Materials besteht darin, daß es in ungetrocknetem Zustand flexibel in beliebige Formen von Hohlräumen eingedrückt werden kann und sich diesen dabei anpaßt. Wenn es dann trocknet, behält es schrumpffrei die vorgegebene Gestalt und stellt einen mechanisch stabilen Raumabschluß her, der im Brandfall durch die Intumeszenz des erfindungsgemäßen Tränkmittels gewahrt bleibt.
c) Eine Mullbinde wurde mit der APBE-Lösung satt getränkt, aufgewickelt und in eine Polyethylen-Folie eingeschweißt. Nach dem Gelieren bei 80°C war das Tränkmittel in dem Wickel fixiert. Dennoch ließ sich der Wickel wieder abwickeln. Mit der abgewickelten Binde wurde ein Kunststoffrohr (Durchmesser 5 cm) 6-fach umwickelt. Dieses fiel dann auch nach Trocknung bei Beflammung mit einem Erdgasbrenner nicht zusammen und entflammte im Verlauf von 30 Minuten nicht.
d) 100 Teile einer auf 60 % verdünnten APBE-Lösung wurden mit 100 Teilen Glas-Mikrokugeln und 30 Teilen Glasfasern (handelsübliche Stapelfasern) gut vermischt. Das Gemisch wurde in eine Kunststoff-Kastenform im Format eines Ziegelsteins gegeben und bei 95°C geliert. Danach entnahm man der Form einen festen Block geliertes Material, aus dem die Tränklösung nicht mehr ablief.
   Derartige Blöcke können als Brandschutzbarrieren Verwendung finden oder, gegebenenfalls nach Zerkleinerung in feuchtem Zustand, als ein kittartiges Material zum brandschützenden Ausfüllen von Fugen und Hohlräumen dienen.
e) Ein handelsübliches flexibles Isolationsrohr aus Weichschaumstoff wurde mit einer auf 65 % verdünnten APBE-Lösung satt getränkt und anschließend durch Erwärmung in einem Mikrowellenfeld geliert. Danach war das ungetrocknete, modifizierte Rohr noch voll flexibel, das Tränkmittel aber in ihm fixiert. Dieses Rohr kann in flexiblem Zustand um zu schützende Kabelstränge oder Rohre gelegt werden und wird nach dem Austrocknen fest. Derartige flexible und bei Austrocknung sich versteifende Ummantelungen können für Brandschutzzwecke verwendet werden.
f) 700 Teile handelsüblicher Blähgraphit vom SOₓ-Typ wurden mit 300 Teilen der APBE-Lösung vermischt und in die auch im Beispiel 15 d) verwendete Kastenform gefüllt und geliert. Man erhielt eine Art Ziegelstein, der nahezu schrumpffrei trocknete. Aus derartigem Material können durch spanabhebende Bearbeitung oder durch direkte Formgebung Formteile für Zwecke des vorbeugenden Brandschutzes hergestellt werden. Bei Erhitzung auf Temperaturen über 180°C intumeszieren derartige Formteile unter Volumenvergrößerung um mehr als 500 %, ohne daß der expandierende Blähgraphit abstäubt. Er bleibt innerhalb des intumeszierenden Materials gebunden.
g) 100 Teile bei 270°C vorexpandierter Blähgraphit (Schüttgewicht 110 g/l) wurden mit 200 Teilen APBE-Lösung zu einem Brei vermischt und geliert. Das gelierte Material wurde in einer Kugelmühle in einen thixotropen Brei überführt. Dieser ist kartuschengängig und kann als Kitt oder Fugenfüllmaterial für Zwecke des vorbeugenden Brandschutzes Verwendung finden. In aufgetrocknetem Zustand intumesziert die Masse bei Beflammung um ca. 400 Volumen-%.
h) 100 Teile bei 650°C expandierten Blähgraphits wurden mit 150 Teilen einer 65%igen ABPE-Lösung vermischt und das so erhaltene erdfeuchte Material bei RT zu einer Platte mit ca. 4 cm Dicke mit 0,1 kg/cm² Druckbeaufschlagung verpreßt.
   Dann wurde die Platte der Form entnommen und in einem Heizschrank bei 120°C getrocknet. Man erhielt eine stabile elektrisch leitfähige Platte mit einem Raumgewicht von ca. 200 g/l.
   Durch eine Nachtemperung bei 250-300°C wurde der Plattenverbund wasserbeständig.
   Derartige Platten sind für Abschirmungszwecke oder Zwecke des Brandschutzes einsetzbar. Sie können auch als Sandwich-Schichten Verwendung finden.

### Beispiel 16

### Anstrich- und Beschichtungsmittel

Eine 75 %ige APBE-Lösung wurde als Anstrichmittel verwendet. Die Lösung wurde mit einem Pinsel auf 3 mm dickes Buchensperrholz satt in einer Menge von 1,5 kg/m² aufgetragen. Nach dem Auftrocknen erhielt man eine glänzende, nicht klebende, rißfreie und transparente Lackierungsschicht auf dem Holz.

Ein 10 x 10 x 0,3 cm großes, solcherart lackiertes Holzmuster wurde waagerecht über eine ca. 1000°C heiße Flamme eines Erdgasbrenners so installiert, daß die Flamme in der Mitte des quadratischen Musters auf die lackierte Fläche auftraf. Nach 60 Sekunden Beflammung wurde die Flamme gelöscht.

Auf der lackierten Schicht hatte sich eine isolierende, 5 mm hohe, feinporige Schicht aus keramisiertem Material gebildet. Die Rückseite des Holzmusters war nahezu unverändert. Es wurde kein Nachbrennen beobachtet.

Das gleiche Experiment wurde mit einer unbehandelten, gleichartigen Sperrholzplatte wiederholt. Das unbehandelte Holzbrett brannte vollständig ab.

## Patentansprüche

1. Gelbildner, dadurch gekennzeichnet, daß sie
a) saure Aluminiumphosphate, gegebenenfalls in Form von Umsetzungsprodukten mit 0,01 bis 4 Mol Alkanolaminen pro Mol Aluminiumphosphat und
b) Umsetzungsprodukte von Borsäure mit Alkanolaminen enthalten, wobei a) und b), gerechnet als Feststoffe, im Gewichtsverhältnis 100:55 bis 100:0,5 vorliegen und die Gelbildner 0,5 bis 85 Gew.-% Wasser und Aluminium, Bor, Phosphor und Alkanolamin im atomaren bzw. molaren Verhältnissen von
| A1 | B | P | Alkanolamin |
|---|---|---|---|
| 1 | 1,2 bis 1,8 | 2,3 bis 3,7 | 2,3 bis 3,7 |
enthalten.

2. Gelbildner nach Anspruch 1, dadurch gekennzeichnet, daß sie Umsetzungsprodukte von einem Atom-Äquivalent Aluminium (Al³⁺) in Form von Aluminiumhydroxid mit bis 2,3 bis 3,7 Molen ortho-Phosphorsäure und Umsetzungsprodukte von einem Atom-Äquivalent Bor (B³⁺) in Form von Borsäure oder Borsäurevorläufer mit 0,5 bis 4 Molen Alkanolamin enthalten.

3. Gelbildner nach Ansprüchen 1, dadurch gekennzeichnet, daß sie weniger als 50 Gew.-% Wasser enthalten.

4. Gelbildner nach Ansprüchen 1 bis 3, dadurch gekennzeichnet, daß sie zusätzlich Tenside, Haftvermittler, Farbgeber, Porenkeimbildner, Füllstoffe, Lichtschutzmittel, Oxidationsschutzmittel, Verstärker, carbonisierende Polyalkohole, oligomere oder polymere Zusätze, Polymerdispersionen und/oder blähfahige Materialien enthalten.

5. Verfahren zur Herstellung von Gelbildnern nach Anspruch 1, dadurch gekennzeichnet, daß man eine zur Aluminiumphosphat-Bildung befähigte Aluminiumverbindung und eine zur Aluminiumphosphat-Bildung befähigte Phosphorverbindung im Molverhältnis 1:2,3 bis 1:3,7 in Gegenwart von Wasser zu einer Aluminiumphosphatlösung umsetzt, separat davon eine zur Aminsalz-Bildung befähigte Borverbindung und ein Amin im Molverhältnis 1:1,3 bis 1:3,1 zusammenbringt und dieser Lösung die Aluminiumphosphatlösung in einem Molverhältnis von A1:B von 1:1,2 bis 1:1,8 zusetzt.

6. Verfahren nach Anspruch 5, dadurch gekennzeichnet, daß man Aluminiumhydroxid, ortho-Phosphorsäure, ortho-Borsäure und Ethanolamin einsetzt.

7. Gele, dadurch gekennzeichnet, daß sie aus Gelbildnern nach Ansprüchen 1 bis 4 oder hergestellt nach Anspruch 5 zugänglich sind, indem man die Gelbildner 3 bis 80 Stunden auf eine oder mehrere Temperaturen im Bereich von 45 bis 120°C erwärmt.

8. Verwendung von Gelen des Anspruchs 7 zur Herstellung von intumeszenten und/oder brandschützenden Beschichtungen, Tränkungen, Fugendichtstoffen, Kitten, Formkörpern, Dichtungsbändern, Bauelementen, Intumeszenz-Pigmenten und/oder Intumeszenz-Füllstoffen.

## Claims

1. Gel formers, characterised in that they contain
a) acidic aluminium phosphates, optionally in the form of reaction products with 0.01 to 4 mol of alkanolamines per mol of aluminium phosphate and
b) reaction products of boric acid with alkanolamines, wherein a) and b), calculated as solids, are present in the weight ratio of 100:55 to 100:0.5 and the gel formers contain 0.5 to 85 wt.% of water and aluminium, boron, phosphorus and alkanolamine in the atomic or molar ratios of
| A1 | B | P | alkanolamine |
|---|---|---|---|
| 1 | 1.2 to 1.8 | 2.3 to 3.7 | 2.3 to 3.7. |

2. Gel formers according to claim 1, characterised in that they contain reaction products of one atom equivalent of aluminium (Al³⁺) in the form of aluminium hydroxide with 2.3 to 3.7 mol of ortho-phosphoric acid and reaction products of one atom equivalent of boron (B³⁺) in the form of boric acid or boric acid precursors with 0.5 to 4 mol of alkanolamine.

3. Gel formers according to claim 1, characterised in that they contain less than 50 wt.% of water.

4. Gel formers according to claims 1 to 3, characterised in that they additionally contain surfactants, coupling agents, colouring agents, pore nucleating agents, fillers, light stabilisers, anti-oxidants, reinforcing materials, carbonising polyalcohols, oligomeric or polymeric additives, polymer dispersions and/or intumescent materials.

5. Process for the production of gel formers according to claim 1, characterised in that an aluminium compound capable of forming aluminium phosphate and a phosphorus compound capable of forming aluminium phosphate are reacted in a molar ratio of 1:2.3 to 1:3.7 in the presence of water to yield an aluminium phosphate solution, a boron compound capable of forming an amine salt and an amine are separately brought together in a molar ratio of 1:1.3 to 1.3:1 and the aluminium phosphate solution is added to this solution in a molar ratio of A1:B to 1:1.2 to 1:1.8.

6. Process according to claim 5, characterised in that aluminium hydroxide, ortho-phosphoric acid, orthoboric acid and ethanolamine are used.

7. Gels, characterised in that they may be obtained from gel formers according to claims 1 to 4 or produced according to claim 5 by heating the gel formers for 3 to 80 hours to one or more temperatures in the range from 45 to 120°C.

8. Use of the gels of claim 7 for the production of intumescent and/or flame-proofing coatings, impregnating preparations, joint sealers, putties, mouldings, sealing tapes, structural units, intumescent pigments and/or intumescent fillers.

## Revendications

1. Compositions gélifiantes, caractérisées en ce quelles contiennent
a) des phosphates d'aluminium acides, le cas échéant à l'état de produits de réaction avec 0,01 à 4 moles d'une alcanolamine par mole du phosphate d'aluminium et
b) des produits de réaction de l'acide borique avec des alcanolamines, les composants a) et b) étant présents dans des proportions relatives en poids de 100:55 à 100:0,5 sur les matières solides, et les compositions gélifiantes contenant 0,5 à 85% en poids d'eau et d'aluminium, de bore, de phosphore et d'alcanolamines à des proportions atomiques et molaires respectives de
| Al | B | P | Alcanolamine |
|---|---|---|---|
| 1 | 1,2 à 1,8 | 2,3 à 3,7 | 2,3 à 3,7 |

2. Compositions gélifiantes selon revendication 1, caractérisées en ce qu'elles contiennent des produits de réaction d'un équivalent atomique d'aluminium (Al⁺³) à l'état d'hydroxyde d'aluminium avec 2,3 à 3,7 moles d'acide orthophosphorique et des produits de réaction d'un équivalent atomique de bore (B⁺³) à l'état d'acide borique ou de produits précurseurs de l'acide borique avec 0,5 à 4 moles d'une alcanolamine.

3. Compositions gélifiantes selon revendication 1, caractérisées en ce qu'elles contiennent moins de 50% en poids d'eau.

4. Compositions gélifiantes selon les revendications 1 à 3 caractérisées par ce qu'elles contiennent en outre des agents tensioactifs, des adhésifs, des colorants, des agents de nucléation pour formation de pores, des matières de charge, des agents de protection contre la lumière, des agents de protection contre l'oxydation, des matières renforçantes, des polyalcools carbonisables, des additifs oligomères ou polymères, des dispersions de polymères et/ou des matières gonflables.

5. Procédé de préparation des compositions gélifiantes selon revendication 1, caractérisé en ce que l'on fait réagir un dérivé de l'aluminium capable de former un phosphate d'aluminium et un dérivé du phosphore capable de former un phosphate d'aluminium dans un rapport molaire de 1 : 2,3 à 1 : 3,7 en présence d'eau, la réaction donnant une solution de phosphate d'aluminium, et séparément on met en contact un dérivé du bore capable de former un sel d'amine et une amine dans un rapport molaire de 1 : 2,3 et 1 : 3,1 et on ajoute cette solution à la solution du phosphate d'aluminium à un rapport molaire Al/B à 1:1,2 à 1 : 1,8.

6. Procédé selon revendication 5, caractérisé en ce que l'on utilise l'hydroxyde d'aluminium, l'acide orthophosphorique, l'acide orthoborique et l'éthanolamine.

7. Gels, caractérisés en ce qu'ils sont préparés à partir de compositions gélifiantes selon les revendications 1 à 4 ou préparés selon revendication 5, en chauffant les compositions gélifiantes pendant 3 à 80 heures à des températures dans l'intervalle de 45 à 120°C.

8. Utilisation des gels selon revendication 7 pour l'application de revêtements, la réalisation d'imprégnations, la préparation de masses d'étanchéité pour joints, de mastics, d'objets moulés, de rubans d'étanchéité, d'éléments de construction intumescents et/ou protégeant contre l'incendie, de pigments intumescents et/ou de matières de charge intumescentes.
